# EUROPÄISCHE PATENTSCHRIFT

(11) **EP 1 986 826 B1**
(45) Veröffentlichungstag und Bekanntmachung des Hinweises auf die Patenterteilung: **21.10.2009**
(21) Anmeldenummer: 07710497.4
(22) Anmeldetag: 23.02.2007
(51) Int. Cl.: B25J 9/14, F15B 15/10, A63B 21/008

(54) **ROBOTERARM**
ROBOT ARM
BRAS DE ROBOT

(30) Priorität: 24.02.2006 AT 3162006; 27.09.2006 AT 16072006
(43) Veröffentlichungstag der Anmeldung: 05.11.2008
(73) Patentinhaber: Ferrobotics Compliant Robot Technology GmbH, 4031 Linz (AT)
(72) Erfinder: FERRARA, Paolo, A-4531 Kematen an der Krems (AT)
(74) Vertreter: Bickel, Michael
(86) Internationale Anmeldenummer: PCT/AT2007/000097
(87) Internationale Veröffentlichungsnummer: WO 2007/095662

(56) Entgegenhaltungen:
- BR-A- 9 303 695
- US-A- 4 784 042
- US-A- 4 984 568
- US-B1- 6 168 634
- US-B1- 6 532 400

## Beschreibung

Die Erfindung betrifft einen flexiblen Roboterarm welcher durch Luftmuskeln angetrieben wird.

Die DE 3630822 C2 (Bridgestone) zeigt einen um genau eine Achse schwenkbaren Arm für einen Industrieroboter. Der Arm ist an einer drehbar gelagerten Riemenscheibe befestigt, welche von einem Seil umspannt wird, wobei an den beiden von der Riemenscheibe wegführenden Enden jeweils ein sogenannter Luftmuskel angeordnet ist. Ein Luftmuskel besteht aus einem schlauchartigen Mittelteil und zwei plattenartigen Abschlussstücken, von denen zumindest eines mit einem Luftdurchlass versehen ist. Wenn der schlauchartige Mittelteil aufgeblasen wird, so erweitert er sich im Umfang und verkürzt sich in seiner Länge. Dieses Verkürzen der Länge kann unter Überwindung einer äußeren Zugkraft erfolgen. Wenn im Anwendungsfall entsprechend der DE 3630822 ein Luftmuskel anzieht, so wird der Arm in eine Drehrichtung geschwenkt; wenn dieser Luftmuskel nachgelassen wird, und der zweite Luftmuskel anzieht, so wird der Arm in die entgegengesetzte Richtung geschwenkt. Der Arm ist "tastfähig" in dem Sinn, dass er bei Anliegen einer äußere Kraft von sich aus mit einer weichen Charakteristik elastisch nachgibt, wodurch unter Zuhilfenahme von Positionssensoren und der Berücksichtigung des in den Luftmuskeln anliegenden Drucks auf die Größe der äußeren Kraft rückgeschlossen werden kann. Der vorgeschlagene Arm für Industrieroboter hat sich nicht durchgesetzt. Da das elastische Nachgeben hier unkontrolliert erfolgt, hat man eher steifere Antriebsprinzipien, beispielsweise mittels Elektromotoren oder Hydraulikzylindern bevorzugt, und erforderlichenfalls ein "weiches Greifen" durch separate Griffteile verwirklicht.

Die US 4 984 568 zeigt einen mittels mehreren, zueinander schwenkbaren Hydraulikzylindern angetriebenen, zur Rückenmassage dienenden Roboterarm. Er wird am seitlichen Rahmenteil eines Bettegestells befestigt, ragt über die Liegefläche des Bettes hinaus, und drückt auf den Rücken eines auf dem Bett auf dem Bauch liegenden Menschen. Der Roboterarm ist von dem auf dem Bett liegenden Menschen mittels einer Steuereinheit steuerbar. Massageroboter dieser Art haben mehrere Nachteile. Hydraulikanlagen sind kostspielig, schwer, verbreiten oft einen Geruch nach Hydrauliköl und bringen die Gefahr der Verschmutzung durch auslaufendes Hydrauliköl mit sich. Als Massageroboter sind sie auch deshalb gefährlich, da bei einem Fehler in der Hydraulikanlage sehr rasch, sehr gefährlich große Kräfte auf den behandelten Menschen wirken können. Die DE 195 24 666 C1 zeigt einen Massageroboter, welcher ebenfalls seitlich am Bett angeordnet ist. Der über lineare Antriebe in drei Raumkoordinaten bewegliche Werkzeughalter kann verschiedene Massagemittel halten, und damit auf den zu massierenden Menschen einwirken. Für die Steuerung stehen verschiedene Programme zur Auswahl. Die Einwirkung auf den Menschen ist kraftgeregelt. Für die Antriebe sind Pneumatikzylinder oder Elektromotoren vorgesehen. Um bei Fehlern der Regelung Gefährdungen der zu massierenden Person auszuschließen sind in der Anlage Sollbruchstellen vorgesehen, welche bei Überschreiten von zulässigen Kräften brechen.

Die US 6 532 400 beschreibt einen Roboter mit mehreren Segmenten, die in Anlehnung an den Aufbau eines menschlichen Beines aneinander angeordnet sind und mit Hilfe muskelartiger Aktuatoren angetrieben werden. Der Roboter weist eine Steuerung auf, die mit Hilfe von Dehnungssensoren, Beschleunigungssensoren und resistiven Kraftsensoren den momentanen Zustand des Roboters messen und die Aktuatoren entsprechend ansteuern kann.

Massageroboter in sehr ähnlicher Bauart zeigen auch die US 5083552, und die US 2001/0014781 A1. Bei entsprechend guter Steuerung können diese Massageroboter durchaus gut massieren. Sie sind aber durchwegs sehr kostspielig in der Anschaffung, beanspruchen viel Platz, und wirken bedrohlich. Zudem sind sie auf Grund der kaskadenartig aufeinander angeordneten Linearführungen in Bezug auf manche Kräfte, wie sie beim Bewegen durch Menschen im Zusammenhang mit der Massage auftreten können, sehr beschädigungsanfällig.

Die DE 101 39 807 A1 zeigt einen aus mehreren verketteten schwenkbaren Hebeln aufgebauten Roboterarm für industrielle Anwendungen. Das Gelenk zwischen zwei Hebeln ist besonders vorteilhaft ausgeführt. Die Antriebsmittel für die einzelnen Hebel sind direkt an den Hebeln angeordnete elektrisch, hydraulisch oder pneumatisch betätigte Hubstangeneinheiten. Nachteilig ist, dass diese Antriebsmittel relativ schwer, platzaufwendig und kostspielig sind.

Die BR 9303695 A zeigt einen aus mehreren miteinander verketteten schwenkbaren Hebeln aufgebauten Roboterarm wobei jeder der Schwenkhebel aus einer Basis einer Stütze einem schwenkbaren Teil und jeweils zwei Luftmuskeln besteht, wobei Basis und schwenkbarer Teil eines Schwenkhebels an gegenüberliegenden Enden der Stütze befestigt sind, der schwenkbare Teil gegenüber der Stütze um eine dazu normal liegende Achse drehbar gelagert ist, wobei sich die beiden Luftmuskeln zwischen Basis und schwenkbarem Teil erstrecken und am schwenkbaren Teil an unterschiedlichen Seiten der Schwenkachse angreifen und wobei der schwenkbare Teil eines Hebels mit der Basis des zweiten Hebels starr verbunden ist. Trotz des einfachen und robusten Aufbaues hat sich diese Bauweise bisher nicht durchgesetzt, vermutlich deshalb, weil in der etwas schwierigen Ansteuerung der Luftmuskel eine zu große Quelle von Ungenauigkeiten und Gefährdungen gesehen wird.

Die WO 2003080297 A1 beschreibt den Nachbau einer menschlichen Hand und eines menschlichen Armes mit Hilfe von verketteten, aneinander schwenkbaren Teilen, deren Relativbewegung zueinander durch Luftmuskeln angetrieben wird, die über Seile, deren Funktion mit der menschlicher Sehnen vergleichbar ist, auf die einzelnen zu bewegenden Teile einwirken. Der Vorteil von Luftmuskeln wird dabei darin gesehen, dass sie verglichen mit anderen Antriebsmitteln weniger Platz beanspruchen. Die Bauweise entsprechend der WO 2003080297 A1 ist aber dennoch derart komplex, dass sie zwangsläufig zu sehr hohen Kosten führt und damit kaum in nennenswerter Breite zum Einsatz kommen kann.

Die US 5,417,643 und die DE 299 22 651 U1 zeigen einen Stuhl, welcher mit einer als Therapiegerät für die passive Mobilisation von Menschen ausgeführten, mehrgliedrigen Armlehne versehen ist. Die einzelnen Glieder sind geführt beweglich aneinander befestigt. Zwischen den einzelnen Gliedern wirken steuerbare Antriebe. Der auf dem Stuhl Platz nehmende Patient legt einen Arm auf die Armlehne. Entsprechend einem Steuer programm wird dann die Armlehne und mit dieser der Arm des Patienten bewegt. Entsprechend der DE-Schrift wird nicht darauf eingegangen was passiert, wenn die gesteuerten Bewegungen der Armlehne von den Bewegungsmöglichkeiten des Patienten abweichen und somit Schmerzen oder gar Verletzungen des Patienten bewirken könnten. Entsprechend der US-Schrift wird für diesen Fall eine schnelle Abschaltung vorgesehen. Nachteilig daran ist, dass dann, wenn dieses Abschaltung wirksam wird, schon gefährlich große Kräfte auf den Patienten eingewirkt haben können und dass damit die Behandlung abgebrochen wird.

Entsprechend der EP 1 609 451 A1 wird ein Gerät für die passive Heilgymnastik vorgeschlagen, welches aus starren, schalenartigen Teilen besteht, die ähnlich wie Teile einer Ritterrüstung von dem Patienten getragen werden und über Gelenke miteinander verbunden sind. Zwischen einzelnen der zueinander beweglichen Schalenteile wirken Luftmuskeln als steuerbare Aktuatoren. Über die Art der Ansteuerung der Aktuatoren wird nichts gesagt. Die Bauweise aus schalenartigen Teilen bewirkt, dass die Vorrichtung ziemlich schwer wird, und der Vorgang des An- bzw. Ablegens einigermaßen mühselig ist.

Die US 2003/0223844 A1 zeigt ebenfalls eine Vorrichtung, welche aus mehreren starren, schalenartigen Gliedern besteht, die ähnlich wie Teile einer Ritterrüstung von einer Person getragen werden und die über Gelenke miteinander verbunden sind. Die Vorrichtung dient zur Steuerung eines entfernt, beispielsweise im Weltraum, angeordneten Roboters. Elastisch vorgespannte Bowdenzüge helfen mit, einzelne Glieder gegen die Wirkung der Schwerkraft anzuheben und sie dienen dazu, die Stellung einzelner Glieder zueinander zu messen. Abhängig vom Messergebnis wird ein entfernt angeordneter Roboter bewegt. In einer vorteilhaften Weiterentwicklung werden in Abhängigkeit von den auf den Roboter wirkenden Kräften auch gesteuerte Kräfte zwischen den einzelnen Schalen der Vorrichtung ausgeübt.

Der Erfinder hat sich das Ziel gesetzt, einen Roboterarm zur Verfügung zu stellen, welcher in einer Vielzahl von privaten Haushalten in der Industrie, sowie in der Medizintechnik anwendbar ist. Aus Kosten- Robustheits- Gewichts- und Platzgründen ist dabei an eine Bauweise entsprechend der BR 9303695 mit Luftmuskeln als Antriebselementen zu denken. Demgegenüber ist vor allem die Sicherheit zu erhöhen, damit der Roboterarm durch hohe Kräfte oder Anstoßen mit hoher Geschwindigkeit nichts beschädigt und niemanden verletzt und der Roboterarm muss einfacher bedienbar und für eine größere Anzahl von verschiedenen Anwendungen einsetzbar sein. Insbesondere muss der Roboterarm auch als Therapiegerät für die passive und aktive Mobilisation von Gliedmaßen eines Menschen einsetzbar sein.

Zum Lösen der Aufgabe wird ein Roboterarm vorgeschlagen, welcher folgende Merkmale aufweist:
- Der Roboterarm wird als mindestens ein schwenkbarer Hebel ausgebildet. Vorzugsweise besteht er aus mindestens zwei verketteten Schwenkhebeln.
- Jeder Schwenkhebel hat eine konstante Länge, und besteht aus einer Stütze, mit deren einem Ende eine Basis starr verbunden ist, und an deren zweiten Ende ein schwenkbarer Teil angeordnet ist
- Die Basis des zweiten Schwenkhebels ist starr mit dem schwenkbaren Teil des ersten Schwenkhebels verbunden. Die Basis des nächsten Schwenkhebels ist starr mit dem schwenkbaren Teil des vorigen Schwenkhebels verbunden.
- Zwischen Basis und schwenkbarem Teil eines Schwenkhebels sind Luftmuskeln angeordnet, mit Hilfe derer die jeweilige Schwenkstellung aktiv eingestellt werden kann.
- Die Kraft die der Roboterarm nach außen hin ausübt wird durch die Steuerung des Roboterarms erfasst und begrenzt. Dieses Erfassen und Begrenzen erfolgt nicht nur für das Ende des Roboterarms an welchem allenfalls ein Werkzeug angeordnet sein kann, sondern auch für alle zwischen dem Befestigungspunkt des Arms und dem Ende liegenden Schwenkhebel.
- An dem schwenkbaren Teil des letzten Schwenkhebels ist ein Werkzeughalter angeordnet, an welchem verschiedene Werkzeuge angeordnet werden können und/oder ein oder zwei Schwenkhebeln des Roboterarmes können eine Auflagefläche für Unterarm und Oberarm oder andere Glieder einer zu behandelnden Person bieten, indem sie an diesen Gliedern etwa parallel dazu anordenbar sind.
- Die Kraft die der Roboterarm ausüben kann wird auch mechanisch begrenzt, vorzugsweise indem der Gasdruck in den Luftmuskeln vorzugsweise mit Überdruckventilen nach oben hin begrenzt wird.
- Die Geschwindigkeiten mit der Teile des Roboterarms bewegt werden können, wird durch die Steuerung und/oder auch regelungstechnisch durch passive Dämpferelemente begrenzt.
- Bewegungsabläufe die der Roboterarm eigenständig durchlaufen soll, können durch ein Teach-In-Verfahren einprogrammiert werden.
- Zumindest bei einem der Schwenkhebel kann der schwenkbare Teil gegenüber der Basis um zwei nicht parallel zueinander liegende Achsen schwenkbar sein.

Weitere Vorteilhafte Details des mechanischen Aufbaues und vorteilhafte bereitzustellende Eigenschaften der Steuerung des Roboterarmes werden unter Zuhilfenahme der Zeichnungen beschrieben:
- Fig. 1:: ist eine Prinzipdarstellung eines beispielhaften erfindungsgemäß ausgeführten Roboterarms mit drei Schwenkhebeln und einer Werkzeughalterung in Seiten- ansicht. Einzelne Details sind in Schnittansicht gezeigt.
- Fig. 2:: zeigt einen möglichen Ablauf der Informationsverarbeitung bei der Anpassung der Iststellung des zu bewegenden Werkzeughalters bei der Ausführung ent- sprechend Fig. 1 an eine Sollstellung. In den einzelnen Feldern sind Zwischen- ergebnisse der Informationsverarbeitung angegeben. Die mit Pfeilspitzen verse- hen Linien bedeuten die Aufnahme von Daten von Sensoren, oder Berechungs- vorgänge.
- Fig. 3:: ist eine Prinzipdarstellung eines beispielhaften erfindungsgemäß ausgeführten Roboterarms mit drei Schwenkhebeln und einer Auflagefläche beispielsweise für den Arm eines Menschen in Seitenansicht.
- Fig. 4:: zeigt in Form eines Flussdiagramms einen möglichen Informationsverarbei- tungs- und Steuerungsablauf des Gerätes von Fig. 3.

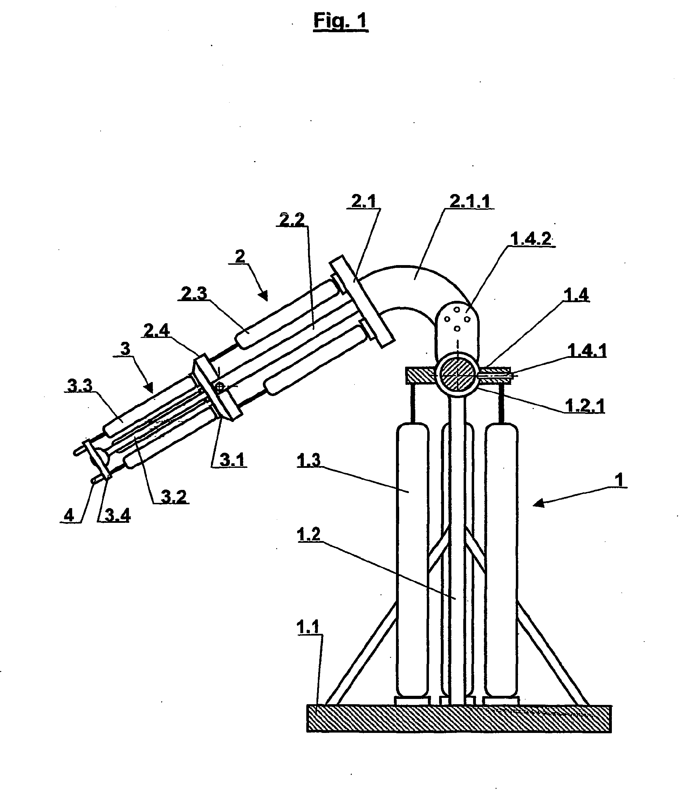

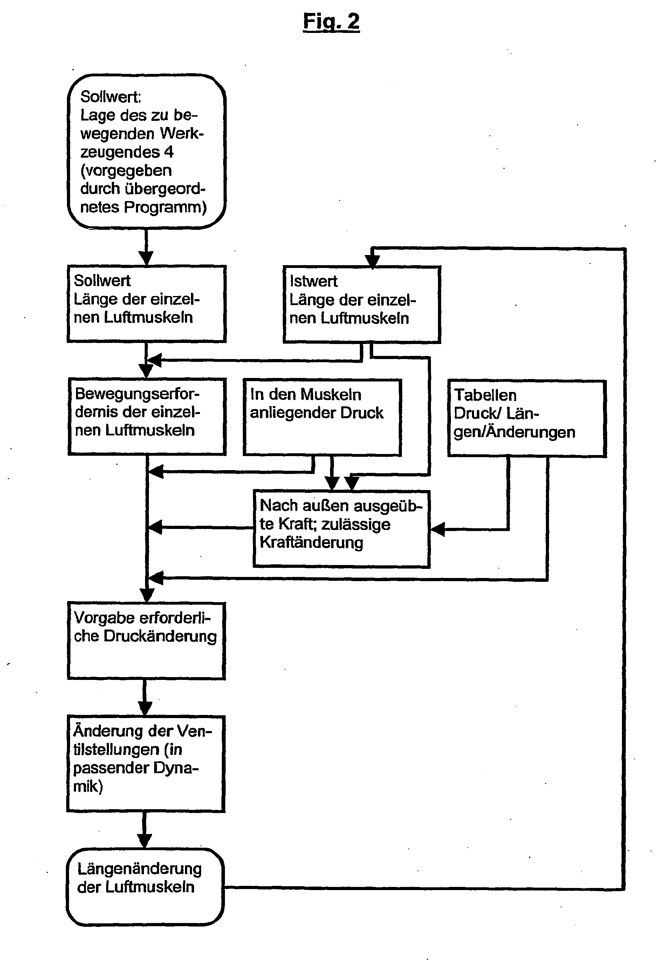

Im folgenden wird erst auf die Ausführung eines erfindungsgemäßen Roboterarmes zum Bewegen eines Werkzeuges - wie in Fig. 1 und Fig. 2 skizziert - näher eingegangen. Erst unten wird dann genauer auf die Ausführung eines erfindungsgemäßen Roboterarmes als Therapiegerät zwecks passiver und aktiver Mobilisation von Gliedmaßen eingegangen.

Die Basis 1.1 des ersten Schwenkhebels 1 trägt den gesamten Roboterarm. Sie kann direkt, oder über fixierbare Rollen auf dem Boden eines Raumes stehen. Sie kann aber auch an einem Gestell an einer Wand, einer Maschine oder einem Einrichtungsgegenstand befestigt sein. Sie kann auch auf einer Plattform angeordnet sein, welche sich gesteuert im Raum bewegt oder maschinell gegenüber einer weiteren fix im Raum stehenden Basis um eine vertikale Achse drehbar ist. Von der Basis 1.1 ragt die mit ihr starr verbundene Stütze 1.2 empor und endet in der Kugel 1.2.1 eines Kugel-Pfanne Gelenks. Die Pfanne dieses Kugel-Pfanne-Gelenks bildet den schwenkbaren Teil 1.4 des ersten Schwenkhebels 1. Zwischen Basis 1.1 und schwenkbarem Teil 1.4 sind drei parallel zur Stütze 1.2 ausgerichtete Luftmuskeln 1.3 angeordnet. Ihre Befestigungspunkte am schwenkbaren Teil 1.4 bilden die Eckpunkte eines Dreiecks in dessen Mitte die Kugel 1.2.1 angeordnet ist. Durch verkürzen von einem oder zwei Luftmuskeln 1.3, und durch dehnen der beiden anderen Luftmuskeln bzw. des dritten Luftmuskels wird der schwenkbare Teil 1.4 um den Mittelpunkt der Kugel 1.2.1 um all jene Achsen schwenkbar, welche durch den Mittelpunkt der Kugel 1.2.1 verlaufen und normal zur Ausrichtung der Luftmuskeln liegen. Da jede der damit möglichen Schwenkbewegungen aus Schwenkbewegungen um genau zwei Achsen zusammengesetzt gedacht werden kann heißt das in der für Roboterarme üblichen Beschreibungsweise, dass der schwenkbare Teil 1.4 um zwei Achsen schwenkbar ist. An Drehbewegung um eine dritte Achse, nämlich jene, welche zu den Luftmuskeln parallel liegt, wird der schwenkbare Teil 1.4 durch einen Anschlag gehindert. Dieser Anschlag wird durch einen starr mit schwenkbaren Teil 1.4 verbundenen Stift 1.4.1, welcher in eine Nut an der Oberfläche der Kugel 1.2.1 ragt gebildet. Diese Nut an der Oberfläche der Kugel 1.2.1 liegt in einer solchen Symmetrieebene der Kugel, welche zu der Ausrichtung der Luftmuskeln 1.3 parallel liegt. Drehbewegung um diese dritte Achse könnte durch die zueinander parallel ausgerichteten Luftmuskeln 1.3 nicht ausreichend gut gesteuert werden, und wird daher durch den beschriebenen Anschlag ganz vermieden. Die Kugel hat in der Längsachse des Schwenkhebels 1 eine Bohrung als Kabel- und Schlauchdurchführung. An Stelle des beschriebenen Kugel-Pfanne-Gelenkes könnte auch ein Kardangelenkangewendet werden, wobei an Stelle einer Kugel zwei Achsbolzen verwendet werden. Ein erster Achsbolzen ist zur Stütze normal ausgerichtet. Der zweite Achsbolzen ist zu diesem normal ausgerichtet und um dessen Achse schwenkbar gelagert. Der schwenkbare Teil ist am zweiten Achsbolzen um dessen Achse schwenkbar befestigt. Auch das Kardangelenk kann eine Kabeldurchführung haben.

Über Zwischenstücke 1.4.2 und 2.1.1 ist die Basis 2.1 des zweiten Schwenkhebels 2 starr mit dem schwenkbaren Teil 1.4 des ersten Schwenkhebels 1 verbunden. Die Zwischenstücke 1.4.2 und 2.1.1 können in mehreren verschiedenen Stellungen aneinander montiert werden, womit die Winkellage zwischen dem schwenkbaren Teil 1.4 des ersten Schwenkhebels 1 und der Basis 2.1 des zweiten Schenkhebels 2, und damit die optimale Ausganglage der beiden Schwenkhebel für den jeweiligen Einsatzzweck zueinander einstellbar ist.

Wenn der schwenkbare Teil 2.4. des zweiten Schwenkhebels 2 gegenüber der Basis 2.1 dieses Schwenkhebels nur um eine Achse drehbar zu sein braucht, so kann er an einem zur Stütze 2.2 dieses Schwenkhebels normal ausgerichteten, zylindrischen Achsbolzen gelagert werden anstatt wie zuvor beschrieben an einer Kugel. In diesem Fall werden nur zwei Luftmuskel verwendet.

Der dritte Schwenkhebel 3 ist in sich gleich aufgebaut wie der erste Schwenkhebel 1. Sein schwenkbarer Teil 3.4 ist also gegenüber seiner Basis 3.1 um zwei Achsen schwenkbar.

Die Basis 3.1 des dritten Schwenkhebels ist unmittelbar mit dem schwenkbaren Teil 2.4 des zweiten Schwenkhebels verbunden.

Im Beispiel gemäß Fig. 1 ist der schwenkbare Teil 3.4 des dritten Schwenkhebels mit einem Werkzeugende 4, am Besten in Form einer arretierbaren Steckvorrichtung für verschiedene Werkzeuge ausgestattet. Werkzeuge in diesem Sinne können verschiedene elektrisch oder pneumatisch steuerbare Greifer oder auch starre Gegenstände wie Steckvorrichtungen, Haken, Hebel Schöpfer, Stemmeisen, Schraubenschlüssel etc. sein. Die Greifer können wiederum Werkzeuge halten wie z.B. verschiedene Massagegeräte, Putztücher, normale Handwerkzeuge, Telefonhörer, Essbesteck etc.. In Anpassung an die zu erwartenden Momentenbelastungen sollte Schwenkhebel 1 stärker ausgeführt sein als Schwenkhebel 2, und Schwenkhebel 2 stärker als Schwenkhebel 3. Damit ist der Schwenkhebel 1 auch der schwerste, und der Schwenkhebel 3 der leichteste. Das bringt gegen einer anderen Gewichtsverteilung auch den Vorteil, dass höhere Beschleunigung des Werkzeugendes 4, wenn gewünscht, möglich sind und dass die Wucht eines allfälligen Aufpralles des Werkzeugendes an ein Hindernis nicht so stark ausfällt.

Die beschriebene Aufeinanderfolge "zweiachsiges Gelenk - Hebel konstanter Länge - einachsiges Gelenk - Hebel konstanter Länge - zweiachsiges Gelenk" entspricht annähernd genau der Aufeinanderfolge "Schultergelenk - Oberarm - Ellbogengelenk - Unterarm - Handgelenk" des menschlichen Armes. Deshalb werden die Bewegungsmöglichkeiten des so ausgebildeten Roboterarms durch die ihn benutzenden Menschen sehr schnell intuitiv sehr gut verstanden, und daher auch ohne lange Einarbeitungszeit optimal eingesetzt. Damit wird die beschriebene Verkettung von in sich nicht längenveränderbaren Schwenkhebeln mit dazwischen liegenden zwei- bzw. einachsigen Gelenken ein extrem guter Kompromiss zwischen der Vielfalt der Bewegungsmöglichkeiten des Werkzeugendes einerseits, und geringen Kosten andererseits.

Luftmuskeln haben gegenüber Stellelementen wie fluidbetriebenen Zylindern oder Elektromotoren die Nachteile, dass sie nur in eine Richtung gezielt steuerbar Kraft ausüben können, und dass damit bei etwa gleichem Aufwand nur eine deutlich schlechtere Positioniergenauigkeit erreichbar ist. Vor allem wegen dem zweiten dieser Nachteile hat man die Vorteile der Luftmuskel für Roboteranwendungen viel zu wenig gesehen, und sie daher kaum eingesetzt.

Vor allem bei Anwendungen für Roboterarme, welche zum persönliche Bedarf von Menschen dienen, und einfache Arbeiten verrichten sollen, reicht die mit Luftmuskeln unkompliziert erreichbare Stellgenauigkeit durchaus aus. Arbeiten an die dabei zu denken ist sind beispielsweise: führen von Massagegeräten, halten von Telefonhörern, führen eines Staubsaugers, Fenster putzen, schleifen, lackieren, halten von Gegenständen wie beispielsweise Werkzeugablagen in einer vorgegebenen Position, etc.. Bei Anwendungen dieser Art ist die relativ schlechte Positioniergenauigkeit von Luftmuskeln überhaupt kein Nachteil. Ganz im Gegenteil, ist die Nachgiebigkeit von größtem Vorteil bei Tätigkeiten mit Kontakt zur Oberfläche, da hier nicht die Position sondern die Andruckkraft von Bedeutung ist.

Die Anwendung von Luftmuskeln als Stellelement für Roboterarme bietet eine ganze Reihe von wichtigen Vorteilen:
- Weicher Anschlag
- Dadurch, dass Bewegung des Roboterarms durch das volumselastische Medium Luft hervorgerufen wird, ist die Kraft-Weg-Charakteristik weichelastisch, und die Einwirkung auf einen äußeren Gegenstand kann sich nicht schlagartig von einer kleinen Kraft auf eine große Kraft ändern.
- Extreme Robustheit (passive Sicherheit, Selbstschutz)
   Im Vergleich zu den verbreiteten Industrierobotern mit Elektromotoren und starren Getrieben können die weichelastischen Luftmuskeln Schläge auf den Roboter selbst abfangen und dämpfen. Dadurch wird der Arm trotz Leichtbau extrem robust gegenüber Spitzenbelastungen und Vibrationen. Die Luftmuskeln selbst, sind verglichen mit Kolben-Zylinder-Stellelemente ebenfalls sehr robust, da sie keine Flächen aufweisen, an denen Teile aneinander gleiten und dichten, und da sie in Folge ihrer Flexibilität als Schlauch durch anstoßende Gegenstände praktisch nicht zu beschädigen sind.
- Kraftgesteuertes Bewegen (aktive Sicherheit, Fremdschutz)
   Indem die Stellung der einzelnen Schwenkhebel und der in den einzelnen Luftmuskeln anliegende Druck gemessen wird, kann unter Beachtung der Druck-Weg-Diagramme der einzelnen Luftmuskeln und der herrschenden Hebelverhältnisse durch eine Steuereinheit rückgerechnet werden, welche äußere Kraft am Werkzeugende 4 anliegt. D.h. die nach außen ausgeübte Kraft kann festgestellt werden, ohne dass dafür extra Kraftsensoren erforderlich sind. Durch die Steuerung kann vorgegeben werden, mit welcher Maximalkraft gegen einen äußeren Widerstand, der sich dem auszuführenden Bewegungsablauf entgegenstellt angedrückt werden darf. Diese Maximalkraft kann relativ sicher und gut geregelt werden, da die Verformungscharakteristik des Roboterarms eine "weichetaslische" ist, und somit kleinere von außen aufgezwungene Bewegungsstörungen nicht zu abrupten Änderungen der Kräfte im Roboterarm führen. Damit ist es übrigens auch gut möglich den Roboterarm an einem Objekt auf Druck anliegend diesem Objekt folgen zu lassen wenn sich dieses Objekt innerhalb gewisser Grenzen bewegt. Da die einzelnen Teile des Roboterarms leicht sind, stellen sie bei einer Kollision mit Menschen kaum eine Gefahr dar, so lange sie nicht zu schnell sind.
   Durch Messung der ausgeübten Muskelkraft, z.B. mittels Dehnungsmessstreifen in der Wirklinie der Kraft, ist eine weitere Genauigkeitssteigerung möglich.
- Sicherheit (passive Sicherheit bei Fehlfunktion)
   Auch ohne Sollbruchstellen im Roboterarm vorzusehen kann sichergestellt werden, dass auch bei fehlerhafter Steuerung durch den Roboterarm keine gefährlich großen Kräfte auf in seinem Bereich befindliche Menschen ausgeübt werden, indem der Druck in den Luftmuskeln beispielsweise durch Überdruckventile, bzw. die Geschwindigkeit durch passive Dämpferelemente begrenzt wird. Solche passiven Dämpferelemente können beispielsweise gebildet werden, indem im Bereich der Leitungen in denen das Gas in die Luftmuskeln oder von diesen weg fließt Engstellen vorgesehen werden um den Gasfluss zu begrenzen. Ebenso können zwischen relativ zueinander bewegten Schwenkhebeln zusätzliche Dämpfungselemente wie beispielsweise Kolben-Zylinderanordnungen bei denen bei Bewegung ein Fluid durch einen Engbereich gepumpt wird, angeordnet werden. Ebenso ist die Anwendung von Bremsvorrichtungen zwischen den relativen Schwenkbewegungen zweier Schwenkhebeln denkbar, welche auf dem Prinzip von Fliehkraftbremsen funktionieren, wonach also zwischen zwei relativ zueinander bewegten Teilen Reibung erzeugt wird, indem diese auf Grund von Fliehkraft aneinander gedrückt werden.
- Kostengünstig
   Auf Grund des einfachen Aufbaues sind Luftmuskeln kostengünstiger als Hydraulik-oder Pneumatikzylinder, oder vergleichbar nutzbare elektrische Antriebe.
- Leichtigkeit
   Luftmuskeln haben ein wesentlich geringeres Gewicht als in der Wirkung vergleichbare Stellantriebe in gängiger anderer Bauweise.

Die Luftmuskeln werden im Normalfall unmittelbar an der Basis des Schwenkhebels befestigt, oder auf direktestem Verbindungsweg durch zugsteife Zugglieder, wie ein Stahlseil, eine Kette, ein Riemen, oder eine Zugstange. Zum jeweiligen schwenkbaren Teil des betreffenden Schwenkhebels sollten die Luftmuskeln ausschließlich auf direktem Weg durch Zugglieder wie beispielsweise Seile, welche einerseits am Luftmuskel, andererseits an der Basis bzw. am schwenkbaren Teil eines Schwenkhebels befestigt sind erfolgen. Alle anderen möglichen Übertragungsmechanismen, wie schwenkende Hebel, Zahnräder, Umlenkrollen etc. bedeuten nicht nur zusätzlichen Anschaffungsaufwand, sondern sind zumeist auch gegen Beschädigungen auf Grund unsachgemäßer Behandlung oder wenig Wartung empfindlich. Nicht zuletzt sind Teile dieser Art auch für Menschen die damit in Berührung kommen können gefährlich und bedürfen sicherer Abdeckungen - welche wiederum Aufwand bedeuten und selbst beschädigt werden können.

Durch die Kombination der Luftmuskeln mit der beschriebenen Folge von z.B. drei Schwenkhebeln wird Robustheit und Sicherheit auch dadurch erreicht, dass der Roboterarm gegen starke Belastung aus annähernd jeder Richtung nachgeben kann, indem in den Gelenken bestimmungsgemäß gedreht wird und indem die Luftmuskeln gedehnt werden. Mit dieser Bauweise ist es ohne weiteres möglich einen Roboterarm zu bauen, welcher einerseits so gefühlvoll zufassen kann, dass er einzelne Weintrauben aus einer Rebe erfassen und pflücken kann, andererseits einen Stahlgegenstand wie beispielsweise einen Meißel halten kann, auf den mit einem schweren Hammer eingeschlagen wird, ohne dass der Roboterarm dadurch beschädigt wird.

Dadurch, dass die einzelnen Schwenkhebel des Roboterarms nicht längenveränderbar sind, können die erforderlichen Leitungen für Druckluftzufuhr, Sensorsignale und elektrische Leitung für allfällige am Werkzeugende gehaltene Elektrowerkzeuge gut an Basis und schwenkbaren Teilen befestigt werden. Bei einer geringen Längenreserve zwischen den einzelnen Gelenken werden sie bei Bewegung des Roboterarms nur etwas geschwenkt, nicht aber darüber hinaus linear bewegt. Bei einer besonders eleganten Variante der Leitungsführung werden diese in den Gelenken durch Bohrungen in der Gelenkskugel oder in Gelenksbolzen durchgeführt.

Von ganz wesentlicher Bedeutung für den praktischen Nutzen des Roboterarms sind wie bei jedem Roboterarm die Möglichkeiten der Ansteuerung. Wünschenswerte, für die praktische Anwendung durch nicht professionelle Anwender wichtige und an der vorgeschlagenen Bauweise durchaus auch realisierbare Bauweisen sind beispielsweise:
- Vorbereitete Weg-Zeit-Kraftprofile.
- Teach-In; d.h. Einprogrammieren eines in weiterer Folge durch den Roboterarm auszuführenden Bewegungsablaufes durch einmaliges manuelles steuern der Armbewegung, unter gleichzeitiger Aufzeichnung dieses Bewegungsablaufes.
- Teach-In; d.h. Einprogrammieren eines in weiterer Folge durch den Roboterarm auszuführenden Bewegungsablaufes durch einmaliges Vorgeben der Armbewegung mit einem optisch erkennbaren Marker, unter gleichzeitiger Aufzeichnung dieses Bewegungsablaufes. Der Roboterarm kann während des Aufzeichnens in Ruhe bleiben, da der Marker durch eine Person gehalten und bewegt werden kann. Verglichen mit anderen Programmierverfahren und auch anderen Teach-In-Verfahren ist dieses Verfahren relativ ungenau. In Kombination mit Anwendungen, bei denen eine vorprogrammierte Bewegung kraftgeregelt nachgefahren wird, ist die Genauigkeit aller dings problemlos ausreichend.
- Teach-In dadurch, dass der Roboterarm im entsprechenden Modus an beliebiger Stelle durch den Programmierer angefasst wird und manuell im gewünschten, später automatisch durchzulaufenden Ablauf bewegt wird.
- Editierbarkeit von einprogrammierten Bewegungsabläufen im Hinblick auf geometrische Änderungen, Geschwindigkeitsänderungen, Änderungen in Bezug auf die anzuwendenden Kräfte.
- Einstellbarkeit von sicherheitsrelevanten Begrenzungen wie maximale Geschwindigkeit, maximale Beschleunigung, maximale Kräfte.
- Einstellbarkeit von großräumiger Positionstoleranz bei gleichbleibender Anpresskraft, solange sich der Arm in Kontakt mit dem Zielobjekt befindet. Der Arm "folgt" also dem Objekt kraftgesteuert, auch dann wenn sich das Objekt- innerhalb gewisser Grenzen - selbst bewegt.
- Regelung dahingehend, dass eine eingestellte Stellung des Roboterarms automatisch wieder angefahren wird, wenn der Roboterarm in Folge einer äußeren Einwirkung wie beispielsweise einem Schlag auf einen seiner beweglichen Teile aus dieser Stellung bewegt wird.

Dadurch, dass die Luftmuskeln Vibrationen, welche von außen aufgebracht werden stark dämpfen, kann der Roboterarm auch gut in bzw. an Geräten verwendet werden, welche selbst vibrieren. Beispielsweise kann ein erfindungsgemäßer Roboterarm auch in einem Auto Verwendung finden.

Vor allem für jenes Teach-In, bei welchem der Roboterarm von Hand aus geführt wird und für die Kraftregelung auf Kontakt, ist die vorgeschlagene Bauweise des Roboterarms sehr vorteilhaft, da der Roboterarm sehr leicht ist, einer Bewegung kaum Reibung entgegengesetzt wird und die weichelastische Bewegungscharakteristik eine Konturenverfolgung stark vereinfacht.

Durch die vorgeschlagene Kombination von Merkmalen eines Roboterarms ergibt sich ein bisher unerreicht starkes Bündel der Vorteile: Kostengünstigkeit, Robustheit, Flexibilität bezüglich der Einsatzmöglichkeiten, Ungefährlichkeit, Sicherheit und intuitives Verständnis der Bewegungsmöglichkeiten. Damit werden erstmals praktisch hilfreiche Roboterarme ermöglicht, welche für kleinere einfache Gewerbebetriebe und mit steigenden Verkaufszahlen auch für Privathaushalte wirtschaftlich sinnvoll anschaffbar sind.

Mit der Anwendung des erfindungsgemäßen Roboterarms für die passive und aktive Heilgymnastik eines Patienten, wobei an zumindest einem dieser schwenkbaren Hebel eine Auflagefläche für einen zu bewegenden Körperteil des Patienten angebracht ist, und wobei Bewegungsabläufe der Auflagefläche in einer mit den schwenkbaren Hebeln in Verbindung stehenden Steuerungseinheit vorprogrammierbar sind, kann gegenüber anderen Geräten, die diese Zweck dienen, folgendes verbessert werden:
- Auf Abweichungen von der Solltrajektorie, also vom gewünschten Weg-Zeit-Verlauf, zufolge Reaktionen des Patienten kann der Roboterarm weich reagieren, sodass der Patient keinesfalls verletzt wird.
- Abweichungen von der Solltrajektorie zufolge Reaktionen des Patienten können durch den Roboterarm registriert und aufgezeichnet werden. Damit kann der Therapieerfolg besser dokumentiert, beurteilt und dementsprechend die Therapie besser angepasst werden.

Bei der typischen Anwendung zur Therapie eines Armes einer sitzenden Person wird ein Gerät vorgeschlagen, welches aus mehreren miteinander verketteten, gegeneinander steuerbar schwenkbaren Hebeln besteht, und an der Seite eines Stuhles angeordnet werden kann, auf welchem die zu behandelnde Person sitzt. Ein oder zwei Schwenkhebel des Gerätes bieten eine Auflagefläche für Unterarm und Oberarm, Beine bzw. weitere Glieder der zu behandelnden Person, indem sie unterhalb dieser Glieder etwa parallel dazu angeordnet sind. Bei den als steuerbare Stellorgane zwischen den einzelnen Hebeln des Gerätes verwendeten Luftmuskeln ist ohnedies zum Ansteuern der Luftmuskeln eine Erfassung der Längen der Luftmuskeln und des Drucks in den Luftmuskeln erforderlich. Diese Erfassung wird auch dazu verwendet, die tatsächlich durchlaufenen Trajektorien zu erfassen. Die Einstellung einer im elastischen Bereich sehr weichen Reaktion des Gerätes auf Abweichungen von der Solltrajektorie, kann durch eine entsprechende Einstellung der ohnedies für den gesteuerten Betrieb der Luftmuskeln erforderlichen Regelung erfolgen.

In der allereinfachsten Ausführüngsform hat der zu diesem Zweck einsetzbare Roboterarm nur einen einzigen Schwenkhebel. Er kann beispielsweise zur Mobilisation eines Schultergelenks eingesetzt werden.

Da Luftmuskeln keine Haftreibung aufweisen kann auch bei kleinen, langsamen Bewegungen ein Ruckeln vermieden werden, ebenso ist auch bis zu kleinsten Kräften kraftgesteuertes Bewegen möglich. Dadurch, dass die Längenänderung der Luftmuskeln durch Druck des volumenelastischen Mediums Luft hervorgerufen wird, ist die Kraft-Weg-Charakteristik an sich schon weichelastisch. Es lässt sich daher mit Hilfe von Luftmuskeln ein weichelastisches Verhalten gegenüber Abweichungen von der Solltrajektorie wesentlich leichter verwirklichen, als dies mit anderen üblichen Stellorganen wie hydraulischen Zylindern oder Elektromotoren der Fall ist. Anders als bei Pneumatikzylindern gibt es bei Luftmuskeln nach dem Stillstand keine Losbrechkraft; es gibt also auch bei kleinsten angreifenden Kräften ein elastisches Nachgeben ohne Rucken. Ein zusätzlicher Sicherheitsgewinn ergibt sich dadurch, dass sich die Kraft, mit welcher ein Luftmuskeln auf einen äußeren Gegenstand wirkt, aus physikalischen Gründen nicht schlagartig erhöhen kann.

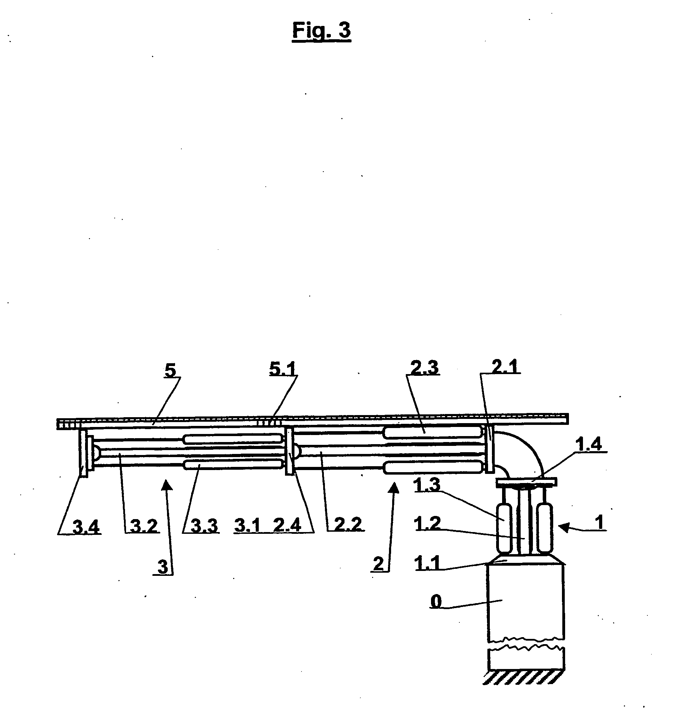

Neben der Basis 0 und der mit flexiblen Abschnitten 5.1 versehenen Auflagefläche 5 für das zu bewegende Glied der zu behandelnden Person besteht der in Fig. 3 skizzierte beispielhafte erfindungsgemäße Roboterarm für die für die passive und aktive Heilgymnastik aus drei miteinander verketteten schwenkbaren Hebeln 1, 2, 3. Eine Seite des ersten schwenkbaren Hebels 1 ist über die Basis 1 gegenüber dem Stuhl oder dem Bett auf welchem sich die zu behandelnde Person befindet, unbeweglich gehalten. Jeder schwenkbare Hebel hat eine konstante Länge, und besteht aus einer Stütze 1.2, 2.2, 3.2 , mit deren erstem Ende eine Basis 1.1, 2.1, 3.1 starr verbunden ist, und an deren zweiten Ende ein schwenkbarer Teil 1.4, 2.4, 3.4 angeordnet ist. Die Basis des dritten schwenkbaren Hebels ist starr mit dem schwenkbaren Teil des zweiten schwenkbaren Hebels verbunden. Die Basis des zweiten schwenkbaren Hebels ist starr mit dem schwenkbaren Teil des ersten schwenkbaren Hebels verbunden. Zwischen Basis und schwenkbarem Teil eines schwenkbaren Hebels sind Luftmuskeln 1.3, 2.3, 3.3 angeordnet, mit Hilfe derer die jeweilige Schwenkstellung aktiv eingestellt werden kann. Über die Längsrichtung der schwenkbaren Hebel erstreckt sich die mit diesen verbundene Auflagefläche 5. Der schwenkbare Teil der einzelnen schwenkbaren Hebel ist beispielsweise über ein Kugel-Pfanne-Gelenk, ein Kardangelenk, oder auch nur ein Bolzen-Zylinder-Gelenk an der zugehörigen Stütze befestigt. Damit kann je nach Bedarf eine Bewegung um eine oder auch um mehrere nicht parallel angeordnete Achsen erzeugt werden. Die Luftmuskel eines Schwenkhebels sind parallel zur Stütze ausgerichtet, und an verschiedenen Seiten der jeweiligen Gelenkachsen angeordnet. Durch Zusammenziehen eines Luftmuskels und Dehnen des bzw. der anderen Luftmuskeln eines schwenkbaren Hebels, wird der schwenkbare Teil dieses schwenkbaren Hebels um die jeweilige Achse bzw. Achsen aktiv gedreht. Bei vereinfachten Ausführungsformen kann auch mit einem einzigen aktiven Schwenkhebel das Auslangen gefunden werden. Weitere passive Schwenkhebel können daran anschließen.

Man kann bei der Auslegung der einzelnen schwenkbaren Hebel und der Verbindungsstücke zwischen ihnen, annähernd die einzelnen Glieder eines menschlichen Armes bezüglich Länge und Freiheitsgraden der Bewegung nachbilden. Man kann aber auch eine kürzere oder längere Verkettung mehrerer, auch längerer schwenkbarer Hebel vor sehen, und so bezüglich der mechanischen Ausführung einen wesentlich größeren Bewegungsspielraum ermöglichen. Das Gerät wird damit besser für verschieden große Menschen und für eine größere Palette von möglichen Bewegungen anwendbar. Gerade bei Anwendung kürzerer Verkettungen von schwenkbaren Hebeln kann mit solchen Hebeln gut das Auslangen gefunden werden, bei denen der schwenkbare Teil bezüglich der Basis nur um eine einzige Achse schwenkbar ist. Dadurch können Kosten vermieden und Robustheit gewonnen werden.

Um während des Betriebes Massenträgheitskräfte möglichst klein zu halten, sollten - in Anpassung an die zu erwartenden Momentenbelastungen - die Schwenkhebel in der Reihenfolge von der Basis 0 weg immer schlanker und schwächer, und damit pro Länge leichter ausgeführt werden.

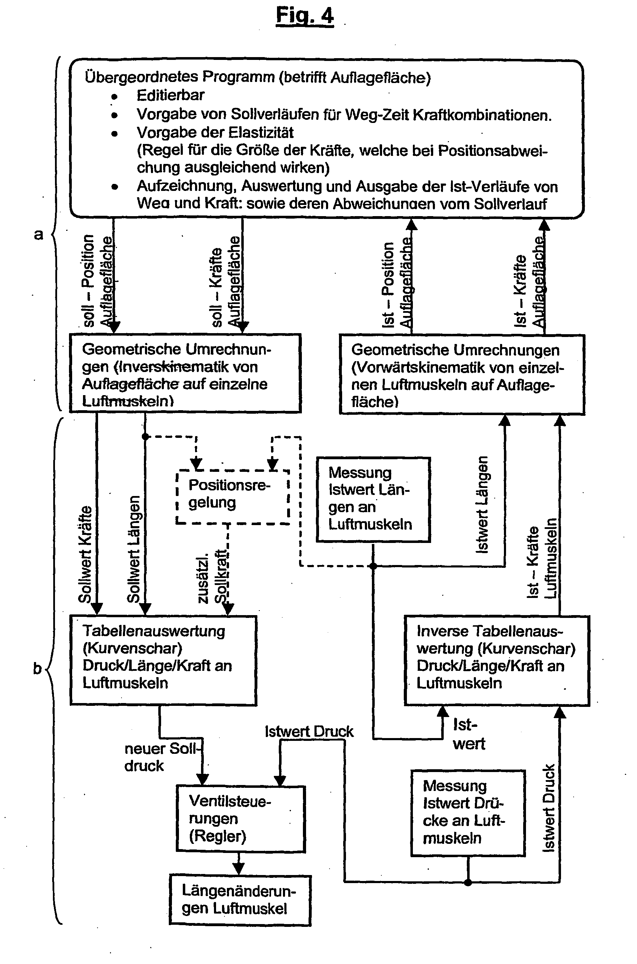

Im Flussdiagramm von Fig. 4 bedeuten die eingerahmten Texte Vorgänge. Die mit Pfeilspitzen versehen Linien dazwischen kennzeichnen entweder nur die Reihenfolge von Vorgängen, oder sie bedeuten auch Informationen die Ergebnis eines Vorganges sind, und in einen nächsten Vorgang einfließen.

Die Vorgänge im Bereich der geschwungenen Klammer b betreffen die übliche Arbeitsweise von gesteuerten Luftmuskeln. Einem Sollwert der Länge der einzelnen Luftmuskeln wird unter Berücksichtigung der tatsächlich gemessenen Längen und der tatsächlich gemessenen Drücke unter Zuhilfenahme von datentechnisch hinterlegten Tabellen oder Kurvenscharen die tatsächliche Länge nachgeführt, indem der Druck in den einzelnen Luftmuskeln entsprechend geregelt verändert wird.

Die Vorgänge im Bereich der geschwungenen Klammer a betreffen Datenverarbeitungsschritte, welche in einer einfachen Datenverarbeitungsanlage durchgeführt werden können. Sie betreffen einerseits das übergeordnete Programm, andererseits die bidirektionale Umrechnung zwischen den Längen der einzelnen Luftmuskeln 1.3, 2.3, 3.3, und den Positionsdaten der Auflagefläche 5, sowie zwischen den Kräften an den einzelnen Luftmuskeln und den Kräften auf die Auflagefläche.

Vom übergeordneten Programm wird vorgegeben, welche Weg-Zeit-Verläufe durch die Auflagefläche durchlaufen werden sollen und es wird auch vorgegeben in welcher Weise auf äußere Kräfte auf die Auflagefläche reagiert werden soll. Diese Reaktion kann beispielsweise ein mehr oder minder weich eingestelltes elastisches Verhalten sein, ein Verhalten also, bei welchem die rückstellend wirkende Reaktionskraft proportional zur Auslenkung von der Sollstellung ist. Es kann aber beispielsweise auch eingestellt werden, dass die Reaktionskraft unabhängig von der Auslenkung eine konstante - geringe - Größe aufweist. Natürlich sind auch Kombinationen daraus, wie beispielsweise "elastisches Verhalten nur bis zu einer bestimmten (geringen) Maximalkraft", sowie beliebige andere Einstellungen durch entsprechende Programmeinstellungen realisierbar, und oft auch sinnvoll.

Beispielsweise kann für das Training der Koordinationsfähigkeit auch überhaupt auf eine Reaktionskraft bei Abweichung vom vorgegeben Weg-Zeit-Verlauf der Ablagefläche verzichtet werden. Statt dessen kann der Sollverlauf des Weges über die Zeit, sowie Abweichungen durch optische und/oder akustische Signale mitgeteilt werden. Durch die Messung und beispielsweise die Integration der Abweichungen über die Zeit werden Aussagen über die Koordinationsfähigkeit gewonnen.

Wesentlich ist, dass die tatsächlichen Weg-Zeit-Verläufe nicht nur mitgemessen werden, sondern vor allem auch ihre Abweichungen vom Sollverlauf aufgezeichnet werden und ausgewertet werden können. Daraus können wesentliche Informationen über den Therapieverlauf und für die weitere Gestaltung der Therapie abgeleitet werden. Im übergeordneten Programm können natürlich viele sicherheitsrelevante Begrenzungen vorgesehen werden. Beispielsweise kann durch die Programmroutine automatisch ausgeschlossen werden, dass physiologisch unmögliche Stellungen überhaupt angefahren werden. Es können Beschleunigungs-, Geschwindigkeits- und Kraftbegrenzungen eingebaut werden. Es kann an Hand der Auswertungen der Abweichungen der Ist-Weg-Zeit-Verläufe beurteilt werden, ob sich ein Patient vermehrt verkrampft , ob er sich entspannt, oder ob er zu sehr ermüdet; dementsprechend kann der weitere Verlauf abgestimmt werden, oder überhaupt die Behandlung unter- bzw. abgebrochen werden. Anstatt Weg-Zeit-Verläufen können natürlich auch Kraft-Zeit-Verläufe unter Einhaltung bestimmter Geschwindigkeits- und Positionsbeschränkungen vorprogrammiert werden.

Bei der erfindungsgemäßen Ausführung des Roboterarmes für die passive und aktive Heilgymnastik werden durch Verwendung von gesteuerten Luftmuskeln als Aktuatoren die wesentlichen Informationen und Steuerungsmittel ohnedies schon bereit gestellt. Für die vorteilhafte Anwendung als Therapiegerät ist im Datenverarbeitungsbereich darüber hinaus im wesentlichen nur mehr eine relativ einfache programmierbare Datenverarbeitungseinheit erforderlich. Diese Datenverarbeitungseinheit kann beispielsweise in Form eines einfachen gängigen tragbaren Computers mit einer gegenüber üblichen Arbeitsplatzcomputem geringen Rechenleistung realisiert werden.

Die Datenverarbeitungsanlage ist natürlich so zu programmieren, dass die Soll-Weg-Zeit-Verläufe per Tastatur mittels einer Eingäbemaske eingegeben werden können. Da sie ohnedies dazu ausgelegt ist, im Betrieb die Ist Weg-Zeit-Verläufe aufzuzeichnen, ist es nur ein kleiner Schritt dazu, derartig aufgezeichnete Verläufe als neue Soll-Verläufe zu verwenden. D.h. die Anlage kann einfach mittels eines Teach-In-Verfahrens programmiert werden, indem die Auflagefläche im entsprechenden Modus angefasst und manuell im gewünschten, später automatisch durchzulaufenden Ablauf bewegt wird.

In der praktischen Anwendung bedeutet dies, dass der Weg, denn der Roboterarm in weiterer Folge automatisch durchlaufen soll einprogrammiert werden kann, indem der Patient den Arm auf die Auflagefläche legt und der Therapeut die Auflagefläche gemeinsam mit dem Arm vorsichtig so bewegt, wie er es für richtig hält.

Bei entsprechender Fertigkeit kann natürlich auch der Patient selbst auf diese Art einen Weg einprogrammieren, indem er dann, wenn der Roboterarm in den Aufnahmemodus geschaltet ist, die Auflagefläche einmal entsprechend bewegt.

Bei einer damit einfach realisierbar werdenden vorteilhaften Therapieform wird ein Bewegungsbereich vorgegeben, welchen die Auflagefläche gemeinsam mit dem Arm des Patienten letztendlich durchlaufen können soll, anfangs aber noch nicht durchlaufen kann. Das Roboterarm trachtet den vorgegebenen Weg zu durchlaufen. Der Patient erzwingt beispielsweise auf Grund von Angst vor Schmerzen, Unbeweglichkeiten in Gelenken, mangelnder Koordinationsfähigkeit oder mangelnder Muskelkraft einen anderen, weniger anspruchsvollen Weg. Dieses Erzwingen erfolgt schmerzfrei für den Patienten, da der Roboterarm sehr nachgiebig auf die durch den Patienten bewirkten Auslenkungen reagiert. Der Roboterarm "merkt sich" diesen zweiten Weg und durchfährt diesen Weg mehrmals, sodass sich der Patient bei dieser möglichen Bewegung entspannt. Nach und nach "versucht" der Roboterarm den zu durchfahrenden Weg wieder an den ursprünglichen Sollweg anzunähern. Dazu werden die Positionsabweichungen bei den einzelnen Sollwegen zum ursprünglichen Sollweg bei den jeweiligen zeitlichen Phasen bei den einzelnen Durchläufen immer geringer eingestellt.

Weitere wesentliche Stichwörter für die Programmierung der übergeordnet steuernden Datenverarbeitungsanlage für die Anwendung eine erfindungsgemäßen Roboterarms als Gerät für die passive und aktive Heilgymnastik sind:
Vorbereitete Weg-Zeit-Kraftprofile.

- Editierbarkeit von einprogrammierten Bewegungsabläufen im Hinblick auf geometrische Änderungen, Geschwindigkeitsänderungen, Änderungen in Bezug auf die anzuwendenden Kräfte.
- Einstellbarkeit von sicherheitsrelevanten Begrenzungen wie maximale Geschwindigkeit, maximale Beschleunigung, maximale Kräfte.
- Einstellbarkeit von großräumiger Positionstoleranz bei gleichbleibender Anpresskraft, solange sich die Auflagefläche in Kontakt mit dem Zielobjekt befindet. Die Auflagefläche "folgt" also dem Objekt kraftgesteuert, auch dann wenn sich das Objekt innerhalb gewisser Grenzen-selbst bewegt.
- Regelung dahingehend, dass eine eingestellte Stellung des Roboterarmes automatisch wieder angefahren wird, wenn er in Folge einer äußeren Einwirkung, wie beispielsweise einem Schlag, auf einen seiner beweglichen Teile aus dieser Stellung bewegt wird.

All diese Funktionen lassen sich unter Anwendung der beschriebenen Bauweise durch Programmierarbeit im Rahmen des normalen fachmännischen Handelns leicht herstellen; daher wird hier nicht weiter darauf eingegangen. Es ist Verdienst des Erfinders erkannt zu haben, dass derartige Funktionen für die Therapie sehr wertvoll sein können, und dass sie unter Anwendung der erfindungsgemäßen Bauweise einfach, kostengünstig und sicher realisierbar sind.

Weiter Vorteile, die sich durch Verwendung von gesteuerten Luftmuskeln als Aktuatoren für einen Roboterarm für die passive und aktive Heilgymnastik ergeben sind:
- Extreme Robustheit
   Im Vergleich zu andersartig angetriebenen Roboterarmen können die weichelastischen Luftmuskeln Schläge auf den Arm selbst abfangen und dämpfen. Dadurch wird der Arm trotz Leichtbau extrem robust gegenüber Spitzenbelastungen und Vibrationen. Die Luftmuskeln selbst sind verglichen mit Kolben-Zylinder-Stellelementen ebenfalls sehr robust, da sie keine Flächen aufweisen, an denen Teile aneinander gleiten und dichten, und da sie in Folge ihrer Flexibilität als Schlauch durch anstoßende Gegenstände praktisch nicht zu beschädigen sind.
   Durch diese extreme Robustheit wird es mit einfachen Anpassungen möglich, den erfindungsgemäßen Roboterarm als Unterwasser-Therapiegerät einzusetzen, als Therapiegerät also, welches beispielsweise die Beine eines Patienten unter Wasser in periodischen Zyklen entsprechend einer einstellbaren Trajektorie bewegt. Eine solche Anpassung kann darin bestehen, dass der unter die Wasseroberfläche ragende Teil des Roboterarmes durch einen strumpfartigen einseitig geschlossenen Schlauch aus einem wasserdichten, flexiblen flächigen Material umgeben wird. Wird kein derartiger Schlauch verwendet, werden also die einzelnen Teile des Roboterarms direkt von Wasser umspült, - was bei entsprechender Materialauswahl kein Problem darstellt - so sind für die Steuerung die Kennlinien der einzelnen Luftmuskeln bezüglich Fluiddruck und abgegebener Kraft bezüglich des Druckes gegenüber einer Anordnung an Luft um den zusätzlich wirkenden Druck in Folge des Gewichtes des Wassers zu verschieben. Um beunruhigendes Sprudeln zu vermeiden sollten dabei auch Luftauslassleitungen von den Luftmuskeln über die Wasseroberfläche geführt werden.
- Sicherheit
   Gefahren für Menschen können in vorteilhafter Weise auch für den Fall vermieden werden, dass die Steuerung des Gerätes fehlerhaft arbeitet. Man braucht dazu nur den Druck in den Luftmuskeln, beispielsweise durch Überdruckventile oder durch eine von der zentralen Steuereinheit unabhängig arbeitende zusätzliche Steuereinheit zu begrenzen. Bei anderen Bauweisen wären dafür Sollbruchstellen erforderlich. Ebenso kann wie schon weiter oben für die Anwendung eines erfindugnsgemäßen Roboterarms als Werkzeugträger beschrieben die Relativgeschwindigkeit zwischen einzelnen relativ zueinander beweglichen Teilen des Roboterarms unabhängig von der datentechnischen Steuerung durch passive, direkt mechanisch wirkende Dämpfungselemente wie Engstellen in den Gasleitungen, Fliehkraftbremsen oder zusätzliche druckmittelbetriebene Stoßdämpfer begrenzt werden.
- Kostengünstig
   Auf Grund des einfachen Aufbaues sind Luftmuskeln kostengünstiger als Hydraulik-oder Pneumatikzylinder, oder vergleichbar nutzbare elektrische Antriebe. Über die für die Ansteuerung standardmäßig erforderlichen Steuerungselemente hinaus sind für das erfindungsgemäße Gerät neben der zentralen Datenverarbeitungsanlage keine zusätzlichen speziellen Steuerungselemente erforderlich.
- Leichtigkeit
   Luftmuskeln haben ein wesentlich geringeres Gewicht als in der Wirkung vergleichbare Stellantriebe in gängiger anderer Bauweise. Neben dem Gewinn an Mobilität wird damit auch ein Sicherheitsgewinn erreicht, da die bewegten Massen niedriger sind.

Durch die vorgeschlagene Bauweise ergibt sich für Therapiegeräte für die passive und aktive Heilgymnastik ein bisher unerreicht starkes Bündel der Vorteile: Sicherheit, Kostengünstigkeit und Wert des Ergebnisses. Es ist zu erwarten, dass durch die erfindungsgemäße Bauweise die wirkungsvolle Therapie mittels passivier und aktiver Heilgymnastik einem wesentlich größeren Anteil jener Patienten zugänglich wird, bei denen dies potentiell nützlich ist, als dies derzeit der Fall ist.

Damit die Auflagefläche auf den Patienten auch andere als reine Druckkräfte ausüben kann, sollte sie mit lösbaren Befestigungsmitteln für die durch sie zu bewegenden Gliedmaßen des Patienten ausgestattet sein. Diese Befestigungsmittel können beispielsweise Riemen mit Schnallen oder Klettverschlüssen, oder klappbare Klammern sein.

Die Erfindung wurde hier vor allem zum Zweck der passiven und aktiven Heilgymnastik im Arm- bzw. Schulterbereich einer zu behandelnden, sitzenden Person beschrieben. Prinzipiell ist die Erfindung aber auch zur passiven und aktiven therapeutischen Bewegung anderer Körperteile, wie beispielsweise der Beine oder des Kopfes gegenüber dem Rumpf geeignet, und die zu behandelnde Person braucht nicht zwangsweise zu sitzen, sondern kann beispielsweise auch stehen oder auf einem Bett liegen.

## Patentansprüche

1. Roboterarm welcher aus einem oder mehreren, gegebenenfalls miteinander verketteten Schwenkhebeln (1, 2, 3) gebildet ist und eine Steuerung umfasst,
wobei ein Schwenkhebel (3) aus einer Stütze (3.2), einer Basis (3.1), einem schwenkbaren Teil (3.4) und mehreren Luftmuskeln (3.3) besteht,
wobei die Basis (3.1) mit einem ersten Ende der Stütze (3.2) starr verbunden ist, der schwenkbare Teil (3.4) an einem zweiten Ende der Stütze (3.2) um eine oder zwei von einer Längsrichtung der Stütze abweichend ausgerichtete Achsen schwenkbar gelagert ist,
wobei sich von der Basis (3.1) zum schwenkbarem Teil (3.4) Luftmuskeln (3.3) erstrecken,
wobei die einzelnen Luftmuskeln (3.3) an gegenüberliegenden Seiten der Schwenkachsen des schwenkbaren Teils (3.4) an diesem angreifen,
wobei im Fall von verketteten Schwenkhebeln (3; 2) die Basis (3.1; 2.1) eines Schwenkhebels starr mit dem schwenkbaren Teil (2.4; 1.4) des nächsten damit verketteten Schwenkhebels (2; 1) verbunden ist, **dadurch gekennzeichnet,**
**dass** durch die Steuerung die Stellung der einzelnen Schwenkhebel (3; 2; 1) und der in den einzelnen Luftmuskeln (3.3; 2.3; 1.3) anliegende Druck gemessen wird und
**dass** unter Miteinbeziehung der Druck-Weg-Diagramme der einzelnen Luftmuskeln (3.3; 2.3; 1.3) und der geometrischen Hebelverhältnisse auf die von allen mit Luftmuskeln (3.3; 2.3; 1.3) versehenen Schwenkhebeln (3; 2; 1) nach außen wirkende Kraft rückgerechnet wird und diese Kräfte begrenzt werden.

2. Roboterarm nach Anspruch 1, der Überdruckventile zur Begrenzung des Gasdrucks in Luftmuskeln (3.3; 2.3; 1.3) nach oben hin aufweist.

3. Roboterarm nach einem der vorangegangen Ansprüche, der passive Dämpferelemente zur mechanischen Begrenzung der Relativgeschwindigkeit zwischen den einzelnen Schwenkhebeln (3; 2; 1) aufweist.

4. Roboterarm nach einem der vorangegangenen Ansprüche, bei dem die Lage der Basis (3.1; 2.1) eines Schwenkhebels (3; 2) an dem schwenkbaren Teil (2.4; 1.4) des davor liegenden Schwenkhebels (2; 1) in verschiedenen Ausrichtungen montierbar ist.

5. Roboterarm nach einem der vorangegangenen Ansprüche, der an Gelenken zwischen zwei Schwenkarmen Bohrungen in einer dort angeordneten Gelenkskugel bzw. in einem dort angeordneten Gelenksbolzen aufweist, durch die erforderliche Leitungen geführt sind.

6. Roboterarm nach einem der vorangegangenen Ansprüche, bei dem ein Gelenk für eine zweiachsige Schwenkbewegung als Kugel-Pfanne-Gelenk ausgebildet ist, wobei eine Nut in der Oberfläche der Kugel (1.2.1) verläuft, in welche ein mit der Pfanne starr verbundener Bolzen (1.4.1) ragt, wobei die Nut in einer solchen Symmetrieebene der Kugel liegt, welche zu der Ausrichtung jener Luftmuskeln (1.3) parallel liegt, welche an der Pfanne angreifen.

7. Roboterarm nach einem der vorangegangenen Ansprüche, bei dem an einem oder zwei Schwenkhebeln (3; 2) eine Auflagefläche (5) für Glieder einer zu behandelnden Person angeordnet ist.

8. Roboterarm nach Anspruch 7, bei dem automatisch die Längen an, sowie die Drücke in den einzelnen Luftmuskeln (1.3;, 2.3; 3.3) gemessen werden, aus diesen Informationen unter Anwendung von datentechnisch hinterlegten, kennzeichnenden Tabellen bzw. Kurvenscharen für die einzelnen Luftmuskeln die an den einzelnen Luftmuskeln anliegenden Kräfte bestimmt werden, entweder aus den gemessenen Längen der einzelnen Luftmuskeln und durch geometrische Umrechnung oder durch direkte Lagemessungen an relativ zueinander beweglichen Teilen die Lage der einzelnen schwenkbaren Hebel (1; 2; 3) sowie der Auflagefläche (5) errechnet wird, aus den Kräften an den einzelnen Luftmuskeln durch geometrische Umrechnung die Kräfte an den einzelnen Schwenkhebeln sowie an der Auflagefläche errechnet werden.

9. Roboterarm nach Anspruch 7 oder 8, bei dem die tatsächliche Stellung der Auflagefläche (5) durch die programmierbare Steuerungseinheit direkt erfasst wird.

10. Roboterarm nach einem der Ansprüche 7 bis 9, bei dem während einer Arbeitssitzung einzelne Bewegungsabläufe in ähnlicher Weise oftmals durchfahren werden, wobei der jeweilige Sollverlauf von Durchlauf zu Durchlauf nach und nach von einer ersten vorgegebenen Form zu einer zweiten, anderen vorgegebenen Form abgewandelt wird, indem die Positionsunterschiede der einzelnen Sollverläufe während der einzelnen zeitlichen Phasen jedes Durchlaufs zu den Positionen der zweiten vorgegebenen Form während der gleichen zeitlichen Phasen bei den einzelnen Durchläufen stückweise verringert werden.

11. Verfahren zum Ansteuern eines Roboterarmes nach Anspruch 1, wobei das Verfahren Folgendes umfasst:
Messen der Stellung der einzelnen Schwenkhebel (3; 2; 1) und des in den einzelnen Luftmuskeln (3.3; 2.3; 1.3) anliegende Drucks durch eine Steuerung;
Rückrechnen auf die von allen mit Luftmuskeln (3.3; 2.3; 1.3) versehenen Schwenkhebeln (3; 2; 1) nach außen wirkende Kraft unter Miteinbeziehung der Druck-Weg-Diagramme der einzelnen Luftmuskeln (3.3; 2.3; 1.3) und der geometrischen Hebelverhältnisse; und
Begrenzen dieser Kräfte.

12. Verfahren nach Anspruch 11, das weiter umfasst:
Regelungstechnisches begrenzen der Kraft, die durch einen einzelnen Schwenkhebel (3; 2; 1) ausgeübt wird.

13. Verfahren nach Anspruch 11 oder 12, das weiter umfasst:
Direktes Messen der von den einzelnen Luftmuskeln (3.3; 2.3; 1.3) aufgebrachten Kraft, wobei die Kraft direkter als über den in den Luftmuskeln (3.3; 2.3; 1.3) anliegenden Druck gemessen wird.

14. Verfahren nach einem der Ansprüche 11 bis 13, das weiter umfasst
Wiederholtes Durchlaufen von Sollverläufen der Bewegung eines mit dem Roboterarm verbundenen und durch ihn zu bewegenden Teiles (4, 5) so weit, wie es unter Einhaltung vorgegebener, durch den Roboterarm selbst automatisch überwachter Kraftgrenzen, möglich ist.

15. Verfahrennach Anspruch 14, das weiter umfasst:
Einstellen einer Reaktionskraft, die in den einzelnen Luftmuskeln eine der Abweichung entgegenwirkt, bei Abweichungen der Stellung des Teiles (4, 5) von der Sollstellung, wobei die Abhängigkeit dieser Reaktionskraft vom Grad der Abweichung von der Sollstellung editierbar voreinstellbar ist.

16. Verfahren nach Anspruch 15, das weiter umfasst:
Einstellen der Größe der Reaktionskraft proportional zur Abweichung, wobei der Proportionalitätsfaktor und die Obergrenze der Reaktionskraft einstellbar sind; und/oder.
Einstellen einer konstanten Reaktionskraft bei Überschreiten einer Mindestabweichung, ansonsten wird keine Reaktionskraft eingestellt; und/oder
optisches oder akustisches Anzeigen der Abweichung, wobei keine Reaktionskraft eingestellt wird.

17. Verfahren nach einem der Ansprüche 11 bis 16, das weiter umfasst:
Aufzeichnen der Bewegungsabläufe des Roboterarms, die hervorgerufen werden indem der Roboterarm an beliebiger Stelle gefasst und durch äußere Kräfte bewegt wird;
Übernehmen der aufgezeichneten Bewegungsabläufe als neuen vorprogrammierten Soll-Bewegungsablauf.

18. Verfahren nach einem der Ansprüche 11 bis 17, das weiter umfasst:
Erfassen der Stellung oder der Bewegung eines optischen Markers über eine Kamera;
datentechnisches Aufbereiten der so durchzulaufenden Trajektorie;
Übernehmen der Trajektorie als neuen vorprogrammierten Soll-Bewegungsablauf des Roboterarmes.

## Claims

1. A robotic arm formed from one or more optionally interlinked pivot levers (1, 2, 3) and comprising a controller,
a pivot lever (3) consisting of a support (3.2), a base (3.1), a pivotable part (3.4) and multiple pneumatic artificial muscles (3.3)
the base (3.1) being rigidly connected to a first end of the support (3.2), the pivotable part (3.4) being pivotably mounted at a second end of the support (3.2) about one or two axes aligned deviating from a longitudinal direction of the support,
pneumatic artificial muscles (3.3) extending from the base (3.1) to the pivotable part (3.4),
the individual pneumatic artificial muscles (3.3) engaging the pivotable part (3.4) at opposing ends of the pivot axes thereof,
where in the case of interlinked pivot levers (3;2) the base (3.1; 2.1) of a pivot lever is rigidly connected to the pivotable part (2.4; 1.4) of the nearest pivot lever (2; 1) interconnected thereto, **characterized in that**
the controller captures the position of the individual pivot levers (3;2;1) and the pressure in the individual pneumatic artificial muscles (3.3; 2.3; 1.3) and,
derives with reference to the pressure-distance diagrams for the individual pneumatic artificial muscles (3.3; 2.3; 1.3) and the geometric lever ratios the externally acting force for all pivot levers (3;2;1) provided with pneumatic artificial muscles (3.3; 2.3; 1.3) and limits the forces thereof.

2. The robotic arm as set forth in claim 1 comprising pressure relief valves to limit the maximum gas pressure in the pneumatic artificial muscles (3.3; 2.3; 1.3).

3. The robotic arm as set forth in any of the preceding claims comprising passive dampers for mechanically limiting the relative velocity between the individual pivot levers (3;2;1).

4. The robotic arm as set forth in any of the preceding claims wherein the support of the base (3.1; 2.1) of a pivot lever (3; 2) is mountable on the pivotable part (2.4; 1.4) of the pivot lever (2; 1) located before the latter.

5. The robotic arm as set forth in any of the preceding claims comprising at joints between two pivot arms, holes drilled through a joint ball arranged therein or through a joint pin arranged therein, through which the necessary conduits are guided.

6. The robotic arm as set forth in any of the preceding claims wherein a joint for biaxial pivoting is configured as a ball and socket joint, a groove being machined in the surface of the ball (1.2.1) into which a pin (1.4.1) rigidly connected to the socket extends, the groove being located such a symmetry plane of the ball that said plane is located parallel to the orientation of the pneumatic artificial muscles (1.3) engaging the socket.

7. The robotic arm as set forth in any of the preceding claims wherein a rest (5) for limbs of a person to be treated is arranged on one or two pivot levers (3;2).

8. The robotic arm as set forth in claim 7 wherein the length and pressures in the individual pneumatic artificial muscles (1.3; 2.3; 3.3) are automatically captured, from the information of which in application of Tables and plots documenting the characteristics data of the individual pneumatic artificial muscles the forces applied to the pneumatic artificial muscles are determined, it being either from the lengths of the individual pneumatic artificial muscles as captured or from geometrical conversional calculation or by directly capturing the position at the parts, each movable relative to the other, that the position of the individual pneumatic artificial muscles (1; 2; 3) and the contact surface area (5) is computed, the forces at the individual pivot levers as well as at the contact surface area being computed from the forces at the individual pneumatic artificial muscles by geometrical conversional calculation.

9. The robotic arm as set forth in claim 7 or 8 wherein the actual position of the rest (5) is directly captured by the programmable controller.

10. The robotic arm as set forth in claim 7 to 9 wherein during a working session individual motion sequences are repeatedly cycled in a similar fashion, each wanted profile from cycle to cycle being converted incrementally from a first programmed form to a second, other programmed form by incrementally reducing the differences in position of the individual wanted profiles during the individual temporal phases of each cycle to the positions of the second programmed form during the same temporal phases in the individual cycles.

11. A method of activating a robotic arm as set forth in claim 1 comprising the steps:
capturing the position of the individual pivot levers (3;2;1) and the pressure in the individual pneumatic artificial muscles (3.3; 2.3; 1.3) by a controller,
deriving with reference to the pressure-distance diagrams for the individual pneumatic artificial muscles (3.3; 2.3; 1.3) and the geometric lever ratios the externally acting force for all pivot levers (3;2;1) provided with pneumatic artificial muscles (3.3; 2.3; 1.3); and
limiting said forces.

12. The method as set forth in claim 11, further comprising:
limiting by feedback control the force exerted by an individual pivot lever (3;2;1).

13. The method as set forth in claim 11 or 12, further comprising:
directly capturing the force exerted by the individual pneumatic artificial muscles (3.3; 2.3; 1.3), the force being captured directly as the pressure applied in pneumatic artificial muscles (3.3; 2.3; 1.3).

14. The method as set forth in any of the claims 11 to 13, further comprising:
repeat cycling wanted profiles of the motion of a part (4, 5) connected to the robotic arm and to be moved thereby to the extent possible in keeping with programmed limits to the force automatically monitored by the robotic arm itself.

15. The method as set forth in claim 14, further comprising:
setting a reaction force counteracting a deviation thereof in the individual pneumatic artificial muscles when the position of the part (4, 5) deviates from the wanted position, editing the function of this reaction force from the degree of deviation from the wanted position being preprogrammable.

16. The method as set forth in claim 15, further comprising:
setting the magnitude of the reaction force in proportion to the deviation, the factor of the proportionality and the upper limit of the reaction force being adjustable; and/or
setting a constant reaction force on violation of a minimum deviation, otherwise no reaction force being set; and/or
visual or auditory indication of the deviation with no setting of the reaction force.

17. The method as set forth in any of the claims 11 to 16, further comprising:
plotting the motion sequences of the robotic arm as prompted by capturing the position of the robotic arm optionally and as moved by external forces;
incorporating the plotted motion sequences as the new preprogrammed wanted motion sequence.

18. The method as set forth in any of the claims 11 to 17, further comprising:
capturing the position or motion of an optical marker over a camera;
data-conditioning the thus cycled trajectory;
incorporating the trajectory as the new preprogrammed wanted motion sequence.

## Revendications

1. Bras de robot composé d'un ou plusieurs leviers pivotants (1, 2, 3), le cas échéant reliés en chaîne les uns aux autres et une commande,
- un levier pivotant (3) se composant d'un appui (3.2), d'une base (3.1), d'une partie pivotante (3.4) et de plusieurs muscles pneumatiques (3.3),
- la base (3.1) étant reliée rigidement à une première extrémité de l'appui (3.2), la partie pivotante (3.4) étant montée pivotante à une seconde extrémité de l'appui (3.2) autour d'un ou deux axes non alignés dans la direction longitudinale de l'appui,
- des muscles pneumatiques (3.3) s'étendant à partir de la base (3.1) vers la partie pivotante (3.4),
- les différents muscles pneumatiques (3.3) agissant sur les côtés opposés des axes de pivotement de la partie pivotante (3.4),
- dans le cas de leviers pivotants (3; 2) reliés en chaîne, la base (3.1; 2.1) d'un levier pivotant est reliée rigidement à la partie pivotante (2.4; 1.4) du levier pivotant suivant (2; 1) relié en chaîne,
**caractérisé en ce que**
- la commande mesure la position des différents leviers pivotants (3; 2, 1) et la pression appliquée dans les différents muscles pneumatiques (3.3; 2.3; 1.3), et
- en tenant compte des diagrammes pression/course des différents muscles pneumatiques (3.3; 2.3; 1.3) et des rapports géométriques des bras de leviers, on calcule les efforts appliqués vers l'extérieur sur tous les leviers pivotants (3; 2; 1) équipés de muscles pneumatiques (3.3; 2.3; 1.3), et on limite ces efforts.

2. Bras de robot selon la revendication 1, comportant des soupapes de surpression pour limiter vers le haut la pression des gaz dans les muscles pneumatiques (3.3; 2.3, 1.3).

3. Bras de robot selon les revendications précédentes, comportant des éléments amortisseurs passifs pour limiter mécaniquement la vitesse relative entre les différents leviers pivotants (3; 2; 1).

4. Bras de robot selon les revendications précédentes, selon lequel
la position de la base (3.1; 2.1) d'un levier pivotant (3; 2) se monte dans différentes directions, sur la partie pivotante (2.4; 1.4) du levier pivotant (2; 1) en amont.

5. Bras de robot selon les revendications précédentes, comportant au niveau des articulations entre deux bras pivotants, des perçages dans une rotule d'articulation ou un goujon d'articulation prévus à cet endroit, pour les traverser par les conduites nécessaires.

6. Bras de robot selon les revendications précédentes,
selon lequel
une articulation pour un mouvement de pivotement selon deux axes est réalisée sous la forme d'une articulation à rotule et coupelle, avec une rainure dans la surface de la rotule (1.2.1) recevant un goujon (1.4.1) solidaire rigidement de la coupelle,
la rainure étant située dans un plan de symétrie de la rotule qui est parallèle à la direction d'alignement de chacun des muscles pneumatiques (1.3) agissant sur la coupelle.

7. Bras de robot selon les revendications précédentes,
selon lequel
un ou deux leviers pivotants (3; 2) comportent une surface d'appui (5) pour les membres d'une personne à traiter.

8. Bras de robot selon la revendication 7,
selon lequel
la longueur et la pression des différents muscles pneumatiques (1.3; 2.3; 3.3) sont mesurées automatiquement, pour obtenir à partir de ces informations par traitements de données, avec des tableaux caractéristiques ou des faisceaux de courbes enregistrés en mémoire pour les différents muscles pneumatiques, pour les efforts appliqués aux différents muscles pneumatiques, soit à partir des longueurs mesurées des différents muscles pneumatiques et par conversion géométrique soit par la mesure directe de la position de pièces mobiles les unes par rapport aux autres pour calculer la position des différents leviers pivotants (1, 2, 3) et la surface d'appui (5) et à partir des efforts appliqués aux différents muscles pneumatiques, par la conversion géométrique, on calcule les efforts appliqués aux différents leviers pivotants ainsi qu'à la surface d'appui.

9. Bras de robot selon la revendication 7 ou 8,
selon lequel
on saisit la position effective de la surface d'appui (5) directement par l'unité de commande programmable.

10. Bras de robot selon les revendications 7 à 9,
selon lequel
au cours d'une session de travail, on parcourt les différents mouvements, plusieurs fois de façon analogue, et on convertit chaque tracée de consigne progressivement d'un passage à l'autre, d'une première forme prédéfinie jusqu'à une seconde autre forme prédéfinie, en réduisant pas à pas les différences de position des différents tracés de consigne au cours des différentes phases de chaque passage, jusqu'aux positions de la seconde forme prédéfinie au cours des mêmes phases chronologiques pour les différents passages.

11. Procédé de commande d'un bras de robot selon la revendication 1, selon lequel le procédé comprend les parties suivantes :
- la mesure de la position des différents leviers pivotants (3; 2; 1) et de la pression appliquée aux différents muscles pneumatiques (3.3; 2.3; 1.3) par une commande,
- le calcul en retour de la force, force agissant vers l'extérieur et appliquée à tous les leviers pivotants (3; 2; 1) équipés de muscles pneumatiques (3.3; 2.3; 1.3), en tenant compte des diagrammes pression/course des différents muscles pneumatiques (3.3; 2.3; 1.3) et des rapports géométriques des bras de leviers et on limite ces efforts.

12. Procédé selon la revendication 11, comprenant en outre :
- la limitation par régulation de la force exercée par les différents leviers pivotants (3; 2; 1).

13. Procédé selon la revendication 11 ou 12, comprenant en outre :
- la mesure directe de la force appliquée par les différents muscles pneumatiques (3.3; 2.3; 1.3), la force étant mesurée plus directement, que par la pression appliquée aux muscles pneumatiques (3.3; 2.3; 1.3).

14. Procédé selon les revendications 11 à 13, comprenant en outre :
- le parcours répété de tracés de consigne du mouvement d'une pièce (4, 5) reliée au bras de robot et déplacée par celui-ci dans la mesure où cela est possible en respectant des limites de force prédéfinies, et surveillées automatiquement, directement le bras de robot.

15. Procédé selon la revendication 14, comprenant en outre :
- le réglage d'une force de réaction s'opposant à un écart dans les différents muscles pneumatiques, en cas d'écarts de la position de la pièce (4, 5) par rapport à la position de consigne,
- la relation entre cette force de réaction et le degré d'écart pouvant être préréglée en fonction du degré d'écart par rapport à la position de consigne, de manière à être éditée.

16. Procédé selon la revendication 15, comprenant en outre :
- le réglage de l'amplitude de la force de réaction proportionnellement à un écart, le coefficient de proportionnalité et la limite supérieure de la force de réaction étant réglables, et/ou
- le réglage d'une force de réaction constante en cas de dépassement d'un écart minimum sinon aucune force de réaction n'est réglée, et/ou
- l'affichage optique ou acoustique de l'écart sans réglage d'une force de réaction.

17. Procédé selon les revendications 11 à 16, comprenant en outre :
- l'enregistrement des courses du bras de robot engendrées en saisissant le bras de robot en un point quelconque, et en le déplaçant par des forces extérieures,
- reprise des déroulements du mouvement, enregistrés comme nouvelle partie préprogrammée du mouvement de consigne.

18. Procédé selon les revendications 11 à 17, comprenant en outre :
- la saisie de la position ou du mouvement d'un marqueur optique par une caméra,
- la préparation selon les techniques informatiques de la trajectoire à parcourir, et
- la reprise de la trajectoire comme nouveau mouvement de consigne préprogrammé pour le bras de robot.
